# EUROPEAN PATENT APPLICATION

(11) **EP 1 729 237 A1**
(43) Date of publication of application: **06.12.2006**
(21) Application number: 06252801.3
(22) Date of filing: 31.05.2006
(51) Int. Cl.: G06F 21/00, H04L 9/14, H04L 29/06, G06F 3/12

(54) **Communication system and device for encryption negotiations**

(30) Priority: 31.05.2005 JP 2005159973
(71) Applicant: Brother Kogyo Kabushiki Kaisha, Nagoya, Aichi 467-8561 (JP)
(72) Inventor: Miyazawa, Masafumi, c/oIntellectual Property Dept., Mizuho-ku Nagoya-shi Aichi 467-8562 (JP)
(74) Representative: Smith, Samuel Leonard

(57) **Abstract**

A network communication system which can shorten processing time by selecting an adequate encryption method based on an encryption processing speed is provided. In the communication process, the client device determines whether the server device is in the same LAN or in WAN and whether the watermark such as "Confidential" is added to data. Then, based on these determination results, the client device extracts encryption methods from common key methods usable, and makes a list of encryption method candidates. The server device selects a common key method to be used to encrypt communication data from the notified list based on the communication speed and the encryption strength. The client device encrypts the communication data using the agreed common key method, and sends the encrypted data to the server device. Then, the server device decrypts the received encrypted data using the relevant common key method.

## Description

### Background of the Invention

### Technical Field

The present invention relates to a technology to select an encryption method to encrypt data to be transmitted.

### Description of Related Art

Conventionally, a network communication system which connects a plural of communication devices via a network, where a receiving communication device receives data transmitted from a transmitting communication device and a communication device provides services such as printing based on received data, has been in widespread use. When confidential information is transmitted using such a network communication system, there is a risk of leakage of the confidential information to a third party who is monitoring communication.

Therefore, confidentiality maintaining technique in such network communication system is realized, where data to be transmitted is encrypted in the transmitting communication device, the encrypted data is transmitted to a receiving communication device, and the received data is decrypted in the receiving communication device. Because data is transmitted as encrypted data with this technology, the confidentiality is maintained.

However, an encryption process and a decryption process load a substantial burden to the CPUs of the devices, this might be a bottle-neck of the service, and it might make a service processing time longer. In addition, encryption of data makes the size of data larger, which cause traffic on a network to be larger. This results in increase of communication time.

A technology to deal with the above problem is disclosed in Japanese Patent Application Provisional Publication No. P2002-312146A (hereinafter, referred to as '146 publication). According to the system disclosed in the publication, a user is allowed to select whether print data is encrypted or not before transmission, and the user can select an encryption method. Further, if it is determined that a client device and a sever device are connected to each other via WAN such as the Internet, data is encrypted before transmission, and otherwise (for example, they are connected via LAN), data is not encrypted.

Using the above technology, a user can judge necessity of encryption, and select a kind of encryption method. The user can determine that encryption is performed only if the communication is done via the Internet which has more risks of information leakage. In this way, shortening of processing time and reduction of data size can be achieved, because workloads of encryption process and communication are reduced by omitting unnecessary encryption.

However, even if the technology disclosed in the '146 publication enables a user to select any adequate encryption method from a plural of encryption methods, a user who is not familiar with ciphers cannot know which encryption method to select. Therefore, the user may select an encryption method which has slow processing speed without any benefit. In this case, a processing time cannot be shortened.

In addition, in the case of using a network which has high risk of leakage of a secret such as the Internet, encryption is automatically performed, but a user is not supposed to select an encryption method based on an encryption processing speed. Therefore, it cannot be achieved that workloads of encryption process and communication are reduced as much as possible, while enough security strength is secured.

### Summary of the Invention

Aspects of the invention is advantageous in that there is provided a network communication systems, which can shorten processing time by selecting an adequate encryption method taking an encryption processing speed into account.

According to aspect of the invention, there is provided a network communication system that selects an encryption method which is used in a communication between a data transmitting device and a data receiving device in accordance with a processing speed of encryption/decryption. In particular, the network communication system is provided with at least two communication devices which are communicatably connected with each other via a network, and the at least two communication devices making an agreement on an encryption method employed therebetween. Then, the at least two communication devices transmits and receives data using the agreed encryption method. At least one of the at least two communication devices is provided with a selection unit that selects a selection unit that selects an encryption method from among a plurality of encryption methods to be used in data transmission between the communication devices in accordance with an encryption processing speed representing a speed of encryption/decryption of communication data, and an encryption method notification unit that notifies the communication devices of the encryption method selected by the selection unit.

Further, one of the at least two the communication devices, which is to transmit the data, is provided with an encryption unit that encrypts transmit data with the encryption method selected by the selection unit, and a transmitting unit that transmits the data encrypted by the encryption unit to another one of the communication devices which is to receive the data. A communication device which transmits data is called a data transmitting communication device.

Further, other one of the two the communication devices, which is to receive the data is provided with a receiving unit that receives encrypted data transmitted from the one of the data communication devices, and a decryption unit that decrypts the data received by the receiving unit in accordance with the encryption method selected by the selection unit. A communication device which receives data is called a data receiving communication device. In the above configuration, by selecting an encryption method taking an encryption processing speed into account, an adequate encryption method may be selected to shorten processing time.

Optionally, a data receiving communication device of the network communication system may be provided with the selection unit and the encryption method notification unit, the encryption method notification unit notifying the data transmitting communication device of the encryption method selected by the selection unit.

Still optionally, the data transmitting communication device may be provided with the encryption method notification unit that notifies the communication devices of the encryption method selected by the selection unit. The data transmitting communication device includes the transmitting unit that transmits the data encrypted by the encryption unit to andata receiving communication device which is to receive the data.

Further, the data receiving communication device is provided with the receiving unit that receives encrypted data transmitted from the one of the data communication devices and the decryption unit that decrypts the data received by the receiving unit in accordance with the encryption method selected by the selection unit. In the above configuration, an encryption method can be determined to be used in transmitting data only between communication devices which actually transmit/receive data.

It is noted that a data transmitting communication device here is configured with general personal computers, etc., that have a function to communicate with other terminals via LAN or WAN such as the Internet. Besides, a data receiving communication device is a device which supplies various services based on transmitted data from a data transmitting communication device, for example, a network printer that prints with print data received via a network, or a server that supplies various services, etc.

Optionally, in order to select an encryption method based on an encryption processing speed (for example, byte/sec), a data receiving communication device may memorize processing speeds to encrypt or decrypt according to each encryption method beforehand. In particular, the network communication system may be configured like follows. The data receiving communication device may be provided with a measure unit that measures a communication speed between the data transmitting communication device and the other of the communication devices. Then, the selection unit selects an encryption method that has a higher speed than the communication speed measured by the measure unit among the encryption method candidates.

As described above, by selecting the encryption method which has a higher encryption processing speed than the communication speed between the data transmitting communication device and the data receiving communication device, it can be avoided that a bottleneck due to workload of encryption and decryption slows down the communication speed, and the processing time can be shortened.

In addition, it is preferable that a processing time can be shortened, while enough security strength is secured, because by selecting an encryption method taking not only an encryption processing speed but also an encryption strength into account.

Therefore, the network communication system may be configured as follows. The selection unit selects an encryption method that has the highest encryption strength from encryption methods of which encryption processing speed has a higher speed than the communication speed measured by the measure unit among the encryption method candidates.

Optionally, in order to select the encryption method which has the highest encryption strength, a data receiving communication device may memorize encryption strength (for example, key length) according to each encryption method beforehand.

According to the above network communication system, by selecting an encryption method which has a higher cryptography processing speed than a communication speed between a data transmitting communication device and a data receiving communication device, and has higher encryption strength, it can be avoided that a bottleneck due to workload of encryption and decryption slows down the communication speed, and a high security can be realized while preventing reduction of a communication speed. Accordingly, an effective network communication system which has both fast processing time and high encryption strength can be achieved.

It is noted that a plural of encryption methods are generally usable for a communication device connected to a network. However, in many cases, a set of usable encryption methods for a data transmitting communication device is not the same as one for a data transmitting communication device. In such a case, if an encryption method which is usable only for data transmitting communication device to transmit data, an error may occur where a partner communication device cannot decrypt the encrypted data.

Therefore, the network communication system may be configured as follows. The data transmitting communication device may be provided with an encryption method candidates notification unit that notifies usable encryption methods for the data transmitting communication device as encryption method candidates to the data receiving communication device. Further, a data receiving communication device may be provided with a determination unit that determines whether there is a usable encryption method for the data receiving communication device among encryption method candidates which are notified by the encryption method candidates notification unit. Then, the selection unit of the data receiving communication device may select an encryption method to be used in the communication between the data transmitting communication device and the data receiving communication device from encryption methods which are usable for both of the devices, if the determination unit of the data receiving communication unit determines that there is an encryption method that is usable for the corresponding data receiving communication device.

As described above, because an encryption method is selected to be used in communication from encryption methods which are usable for both of a data transmitting communication device and a data receiving communication device, an error can be prevented where a partner communication device cannot decrypt encrypted data.

It is noted that there is higher risk of leakage of a secret by monitoring of a third party in WAN which is wide area network that uses public line networks, etc., to which unspecified number of terminals and networks are connected than in LAN which is operated in a limited area such as within the same site area (or the same building). Therefore, it is preferable to use an encryption method with higher encryption strength in the case that communication between a data transmitting communication device and a data receiving communication device is done via WAN than in the case transmitting and receiving data via LAN.

Then, the network communication system may be configured as follows. The data transmitting communication device may be provided with a network determination unit that determines whether a network is WAN or not, and a first extraction unit that extracts encryption methods which have higher encryption strength than a given strength from usable encryption methods for the data transmitting communication device, if the network is determined to be WAN by the network determination unit. Then, the encryption method candidates notification unit notifies the data receiving communication device of encryption methods extracted by the first extraction unit as the encryption method candidates.

Optionally, in order to determine whether the network is WAN or not, IP addresses of devices may be compared, if the network is using TCP/IP such as the Internet or intra-net. If they are not private addresses, the network can be determined to be WAN. Optionally, the network may be determined to be WAN, if the IP addresses of the communication devices have a different network address.

Still optionally, the given encryption strength may be predetermined, or may be configured to be set by a user when communication is necessary. It is preferable that encryption strength is set where enough security is secured to communicate via WAN.

According to the network communication system configured as described above, if the network is determined to be WAN, an encryption method is selected from encryption method candidates which have higher encryption strength than the given encryption strength based on encryption processing speed. Therefore, a processing time can be shortened, while enough security strength is secured even if the communication is done via WAN which has high risk of leakage of secret information.

On the other hand, classification level may be set to communication data according to its confidentiality. For example, in the case of print data or image data, by adding watermark to the data, the classification level such as "Internal Use Only", "Confidential", or "Copy" is set according to confidentiality of the document to be printed or images. In these cases, for example, if high classification level such as "Internal Use Only" or "Confidential" is set to the data which require high confidentiality, it is preferable that an encryption method which has high encryption strength is selected to prevent leakage of the secret information when the transmit data is sent via the network.

Therefore, the network communication system may be configured as follows. A data transmitting communication device may be provided with a classification level determination unit that determine whether the given classification level is set to transmit data, and a second extraction unit that extracts encryption methods which have higher encryption strength than the given strength among usable encryption methods for the data transmitting communication device if the given classification level is determined to be set. Then, the encryption method candidates notification unit notifies a data receiving communication device of encryption methods extracted by the second extraction unit as the encryption method candidates.

According to the network communication system configured as described above, for data which requires high confidentiality, an encryption method is selected from encryption method candidates which have higher encryption strength than the given strength based on a encryption processing speed. Therefore, processing time can be shortened, while enough security strength is secured even if data which require high confidentiality is transmitted.

Optionally, the network communication system may not be provided with the determination unit described above.

Optionally, either of a data transmitting communication device or a data receiving communication device may have a function that extracts encryption methods which have higher encryption strength than the given strength according to the kind of the network, similarly in the case of a network determination unit and a first extraction unit. Namely, the network communication system may be configured as follows. The network communication system may be provided with a network determination unit that determines whether the network is WAN or not, a extraction unit that extracts encryption methods which have higher encryption strength than the given strength from a plural of encryption methods, if the network is determined to be WAN by the network determination unit, and an extraction notification unit that notifies a selection unit of encryption methods extracted by the extraction unit as encryption method candidates. Then, the selection unit selects an encryption method to be used in the communication between a data transmitting communication device and a data receiving communication device from the encryption method candidates which are extracted by the extraction unit.

According to the network communication system described above, a function that extracts encryption methods which have higher encryption strength than the given strength according to the kind of the network can be realized, irrespective of which communication device, a data transmitting communication device or a data receiving communication device, has a network determination unit, an extraction unit, and an extraction notification unit.

Conventionally, as typical encryption methods, a common key method in which a ciphering key and a deciphering key are the same, and a public key method in which the ciphering key and the deciphering key are different have been used. Processing cost of a common key method is far lower than that of a public key method, and the common key method is preferable to encrypt long data. However, in the common key method, how to deliver the common key safely via non-secured communication line is a problem, if a data receiving terminal is in a remote place via WAN. On the other hand, the public key method requires a pair of keys, a public key and a private key, the public key can be delivered to a plural of partners via non-secured communication lines. However, processing cost of the public key method is much higher than that of the common key method, and the public key method is not suitable for encryption of long data.

Then, it is preferable that both of a common key method and a public key method are used at the same time, making up for each other's shortcomings, and effective encryption is achieved. Specifically, the network communication system may be configured as follows. Encryption method candidates from which the selection unit selects are common key methods in which the same key is used for encryption and decryption. Then, a data receiving communication device may be provided with a memory unit that memorizes a public key and a private key of a public key method in which different keys are used for encryption and decryption, and a public key delivery unit that delivers a public key which the memory unit memorizes to the data transmitting communication device. Further, a data transmitting communication device may be provided with a key generation unit that generates a common key according to the encryption method which is notified by the encryption method notification unit, and a common key delivery unit that encrypts the common key generated by the key generation unit with the public key received from the data receiving communication device and delivers the common key to the data receiving communication device. Then, the encryption unit encrypts transmit data with the common key generated by the key generation unit. On the other hand, the decryption unit decrypts the encrypted common key received from the data transmitting communication device with the private key stored in the memory unit, and decrypt encrypted transmit data using the decrypted common key.

According to the above network communication system, a common key method which has a lower processing cost may be used to encrypt communication data. Then, a common key which is used in the common key method is encrypted with a public key of a public key method, and the common key is shared. Thus, the common key which is used in the common key method can be delivered safely using a public key method, and an effective encryption process can be realized while enough security is secured. In addition, since an encryption process is performed after sharing the common key between a data transmitting communication device and a data receiving communication device, an error can be prevented where the partner terminal (the data receiving communication device) cannot decrypt the encrypted data.

According to another aspect of the present invention there is provided a program that may make a computer function as a communication device of the network communication system.

The program may be stored in computer readable recording medium such as a FD, MO, DVD-ROM, CD-ROM, hard disks, and can be used by loading to computers and executed according to need. In addition, the program may be stored in ROM, backup RAM, and these ROM and backup RAM may be built in a computer.

### Brief Description of the Accompanying Drawings

Fig. 1 shows a configuration of network print system 1.
Fig. 2A is a block diagram which shows a configuration of the client PC 10, and Fig. 2B is a block diagram which shows configurations of the print servers 20a and 20b.
Fig. 3 is a ladder chart which shows communication between the client PC 10 and the print server 20.
Fig. 4 is a figure which shows a security setup screen of the client PC 10 in the print process.
Fig. 5 is a flowchart which shows the print data encryption and transmission process executed by the client PC 10.
Fig. 6 is a flowchart which shows the agreement process on the common key method executed by the client PC 10.
Fig. 7A is a figure which shows an example of a list of common key methods generated by the client PC 10, and Fig. 7B is a figure which shows an example of a state where high strength common key methods are extracted from the generated list of common key encryption systems, and other encryption methods are deleted from the list.
Fig. 8 is a flowchart which shows a common key sharing process.
Fig. 9 is a flowchart which shows a communication data receiving process and a print data decryption process.
Fig. 10 is a flowchart which shows the common key method selection process executed by the print server 20.
Fig. 11 shows a table of encryption processing speeds corresponding to each common key method.
Fig. 12 is a flowchart which shows the common key method agreement process executed by the client PC 10.
Fig. 13 is a flowchart which shows a common key method selection process executed by the print server 20.
Fig. 14 is a flowchart which shows a common key encryption list generation process executed by the print server 20.
Fig. 15 is a figure which shows a security setup screen of the print server 20 in a printing process.

### Detailed Description of the Embodiments

Hereinafter, embodiments according to the invention will be described with reference to the accompanying drawings.

### Description of Configuration of Network Print System

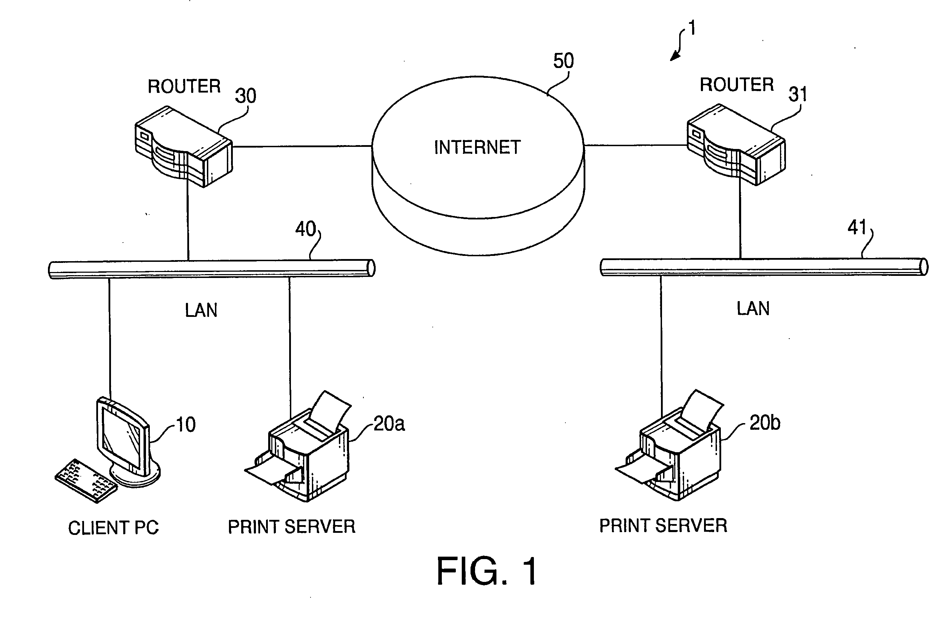

Fig. 1 shows a configuration of network print system 1.

As shown in Fig.1, the network print system 1 according to the embodiment of the present invention is configured with a client personal computer (client PC) 1, and a print server 20a, which are connected to each other communicatably via LAN 40. Further, LAN 40 is connected to the Internet 50 via a router 30 which relays data between networks. On the other hand, a print server 20b is connected to LAN 41. LAN 41 is connected to the Internet 50 via a router 31 which relays data between networks. The client PC 10 and the print server 20b are connected communicatably via the Internet 50.

It is noted that the client PC of the embodiment is a data transmitting communication device, the print severs 20a and 20b are data receiving communication devices, and LAN 40 and 41 and the Internet are networks.

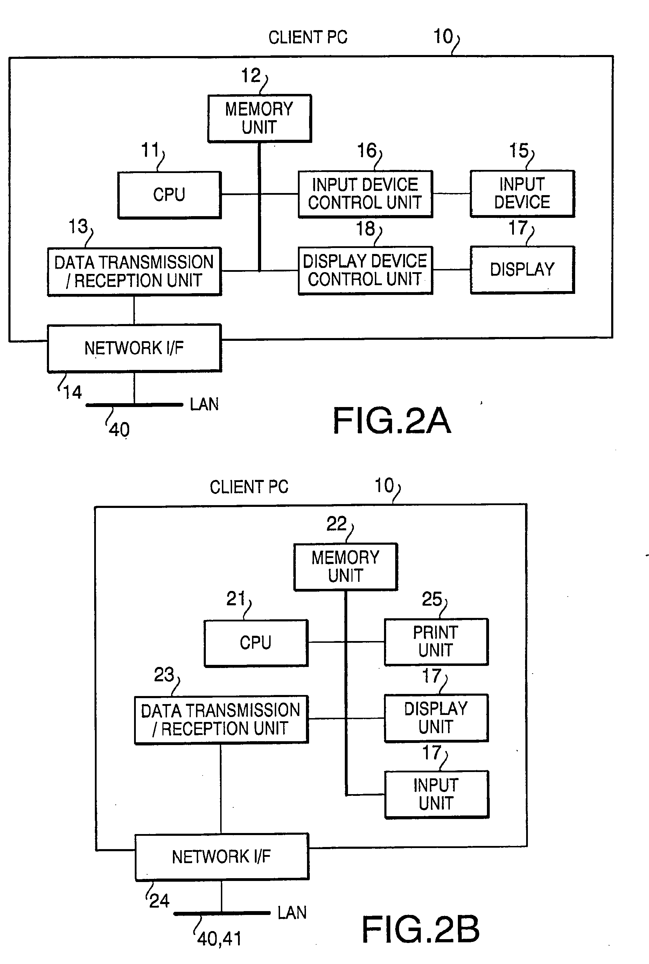

Next, Fig. 2A is a block diagram which shows a configuration of the client PC 10. The client PC 10 is configured with an ordinary personal computer which has enough processing functions, and has a CPU 11 which performs various arithmetic processing, a memory unit 12 which is configured with ROM, RAM and a hard disk device(HDD), etc. (not shown), a data transmitting/receiving unit 13 which controls communication, a network interface(network IF) 14 to which communication cables are connected, an input device 15 which a user can operate (for example, a keyboard, a pointing device), an input device control unit 16 which processes signals from the input device 15, a display 17 which is a crystal liquid display or a CRT and displays various information, and a display control unit 18 which controls displays of the display 17 based on control from the CPU 11, etc.

CPU 11 performs various processes to transmit encrypted print data, when the print data is transmitted to the print servers 20a and 20b via the data transmission unit 13 and the network IF 14. Details of these processes are described later.

In addition, programs of a plural of common key methods to be used in data encryption processing, and programs of public key methods to be used in encryption processing to share the common key for the common key method with the communication partners, etc., are stored in a HDD of the memory unit 12.

Fig. 2B is a block diagram which shows configurations of the print servers 20a and 20b. Hereinafter, the print server 20a or 20b is referred to simply a print server 20, when it is not necessary to distinguish between the two.

The print server 20 has CPU 21 which performs various arithmetic processes, a memory unit 22 configured with ROM and RAM (not shown), etc., a data transmitting/receiving unit 23 which controls communication, a network interface (network IF) 24 to which communication cables are connected, a print unit 25 which are able to produce images on print papers with a recording method such as a laser transfer method or inkjet printing method, a display unit 26 which is configured with a liquid crystal display, etc., and displays various information, an input unit 27 which is configured with keys such as a cross cursor key, and receives input of various information, and so on.

The print sever 20 has a function that is so called a network printer, which receives print data from the client PC 10, and produce images based on the print data. CPU 21 selects an encryption method to be used in receiving print data from the client PC 10, and performs various processes to decrypt the encrypted print data based on the selected encryption method. Details of the processes are described later.

In addition, the memory unit 22 stores programs of a plural of common key methods which are used in data encryption processing, programs of a public key method which is used in data encryption processing to share the common key with communication partners, and a public key an a private key which are used in the public key method.

### First Embodiment

Hereinafter, various processes which are executed in a first embodiment of the network print system 1 will be described.

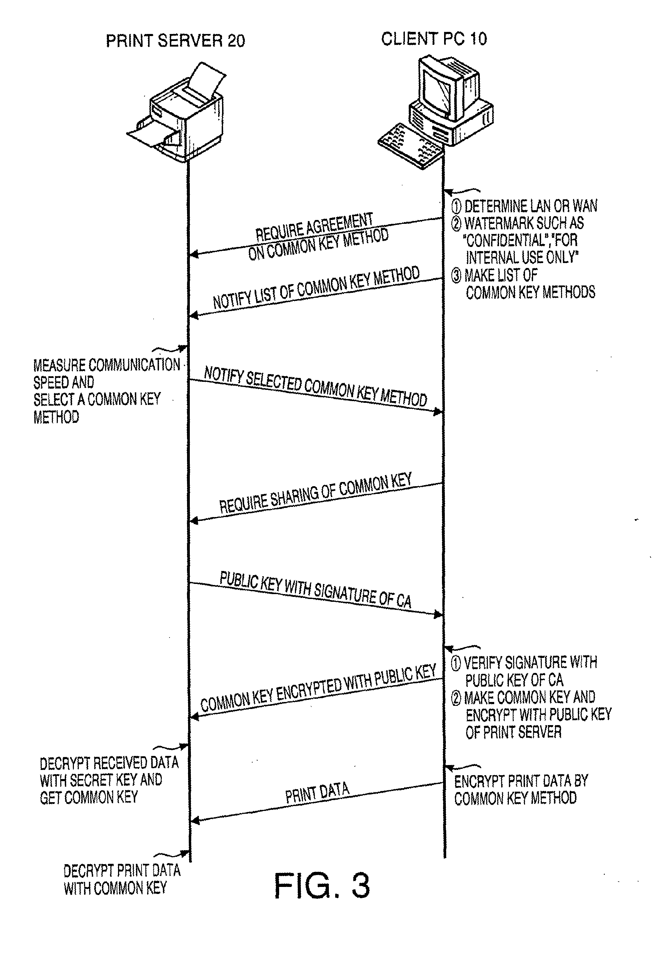

First, referring to a ladder chart shown in Fig. 3, an outline of communication between the client PC 10 and the print server 20 of the first embodiment of the network print system 1 is described.

The client PC 10 and the print server 20 perform a series of commutation processes from the start of printing until the end of printing. In the communication process, first, the client PC determines a situation such as whether a communication partner, the print server 20, is within the same LAN to which the client PC 10 belongs or the communication partner is in WAN such as the Internet 50, etc., and whether a watermark such as "Confidential" or "For Internal Use Only" is added to print data. Then, based on these determination results, the client PC 10 extracts encryption methods which meets the given conditions among common key methods usable for the client PC 10, and make a list of encryption method candidates to be used in print data encryption.

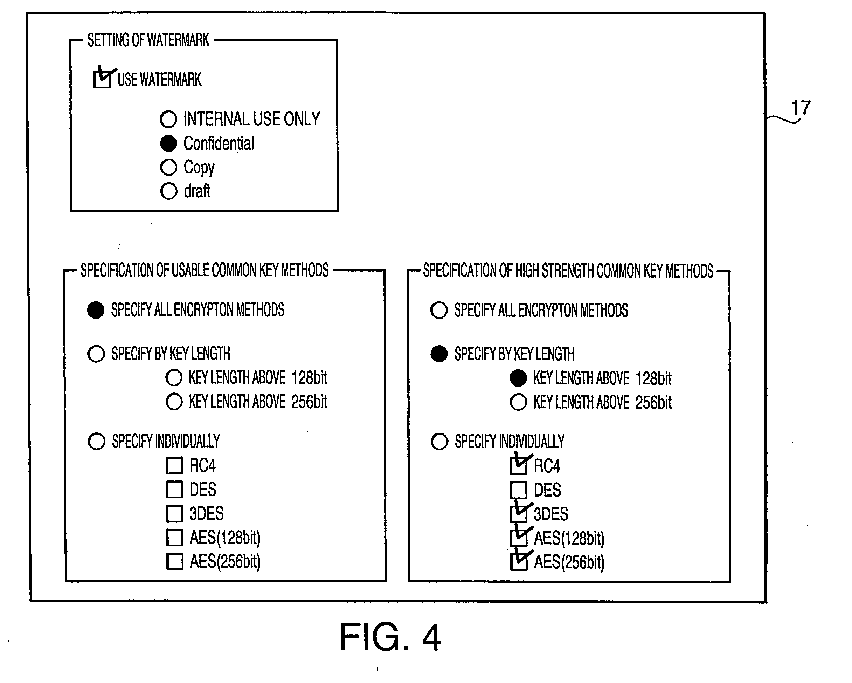

Watermarks added to print data and the given conditions for listing up encryption method candidates are setup by a user beforehand using a security setup screen shown in the Fig. 4. In particular, as shown in Fig. 4, a user indicates check boxes and radio buttons of desired items using a pointing device on the security setup screen displayed by the display 17. In this way, the watermark and the common key methods to be used are setup.

As described in Fig. 3, after the client PC 10 make a list of common encryption method candidates, the client PC sends a "request for agreement on a common key method" to the print server 20 to make an agreement on an common key method to be used to encrypt print data. Next, the client PC notifies the print server 20 of a list of common key methods made by the client PC 10. The print server 20 selects a common key method to be used in encryption processing of print data from common key encryption method candidates in the notified list based on a communication speed between the client PC 10 and the print server 20 and encryption strength, etc. Then, the print server 20 notifies the client PC 10 of the selected common key method. In this way, the agreement on the common key method to be used to encrypt print data between the client PC 10 and the print server 20 is made.

After the client PC 10 received the notification of the common key method selected by the print server 20, the client PC sends a "request for sharing the common key" to perform a common key sharing process. The print server 20 sends the public key of the public key method to transmit/receive an encrypted common key in response to the request for sharing the common key to the client PC 10. It is noted that an electronic signature of a certificate authority (CA) to prove the legitimacy and identification information are added to the public key.

Receiving the public key to which the electronic signature of CA is attached, the client PC 10 validates the electronic signature of the received public key using the public key (public key of CA) issued by the relevant CA, and encrypts the generated common key using the public key. Then, the client PC 10 sends the encrypted common key to the print server 20. Receiving the encrypted common key, the print server 20 obtains the common key by decrypting using the private key of the relevant public key method. Thus, sharing of the common key of the common key method is achieved between the client PC 10 and the print server 20.

Next, the client PC 10 encrypts the print data using the common key which is of the agreed common key method, and sends the encrypted print data to the print server 20. Then, the print server 20 decrypts the received encrypted print data using the common key of the relevant common key method, and the print unit 25 produces images on recording papers based on the decrypted print data.

Hereinafter, various processes executed by the client 10 and the print server 20 in the above series of communication processes are described based on the flowcharts.

### Encryption and Transmission Process of Print Data

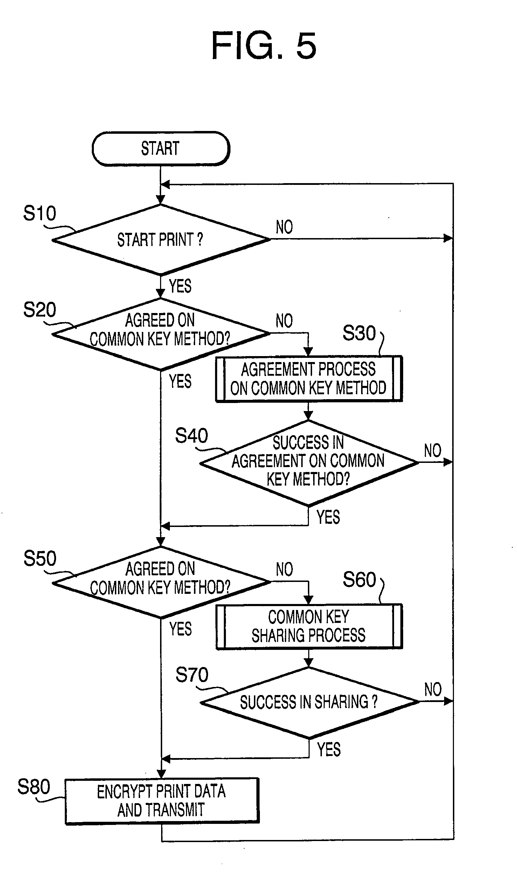

Fig. 5 is a flowchart which shows a print data encryption and transmission process executed by CPU 11 of the client PC 10.

First, at Step 10 (hereinafter referred to simply as "S10", the same goes for other steps), it is determined whether start of printing using the print server 20 is directed. Here, if it is determined that start of printing is not directed (No at S10), the above process is repeated. Then, if it is determined that start of printing is directed (Yes at S10), it is determined whether an agreement on a common key method to be used to encrypt print data which is the object of the data transmission is made. If it is determined that the agreement on the common key method is not made (No at S20), an agreement process on a common key method is performed (S30), and the agreement is made on the common key method to be used to encrypt the print data with a communication partner, the print server 20. Details of the agreement process on the common key method are described later.

Then, it is determined whether the agreement of the common key method is successfully made at S30 (S40). Here, if it is determined that the agreement on the common key method is failed (No at S40), the process goes back to S10. On the other hand, it is determined that the agreement on the common key method is made successfully (Yes at S40), the process goes to S50. If it is determined that the agreement on the common key method is already made (Yes at S20), the process goes directly to S50 without executing S30 and S40.

Next, it is determined whether the common key to be used in agreed common key method is shared with the communication partner, the print server 20 (S50). Here, if it is determined that the common key is not shared (No at S50), a common key sharing process is executed (S60), and the common key is shared with the communication partner, the print server 20. Details of the common key sharing process are described later.

Then, it is determined whether the common key is successfully shared (S70). Here, if it is determined that the common key is not shared successfully (No at S70), the process goes back to S10. On the other hand, if it is determined that the common key is shared successfully (Yes at S70), the process goes to S80. If it is determined that the common key is already shared (Yes at S50), the process goes directly to S80 without executing S60 and S70.

Then, at S80, the print data is encrypted with the common key, and the print data is transmitted to the print server 20.

### Common Key Method Agreement Process

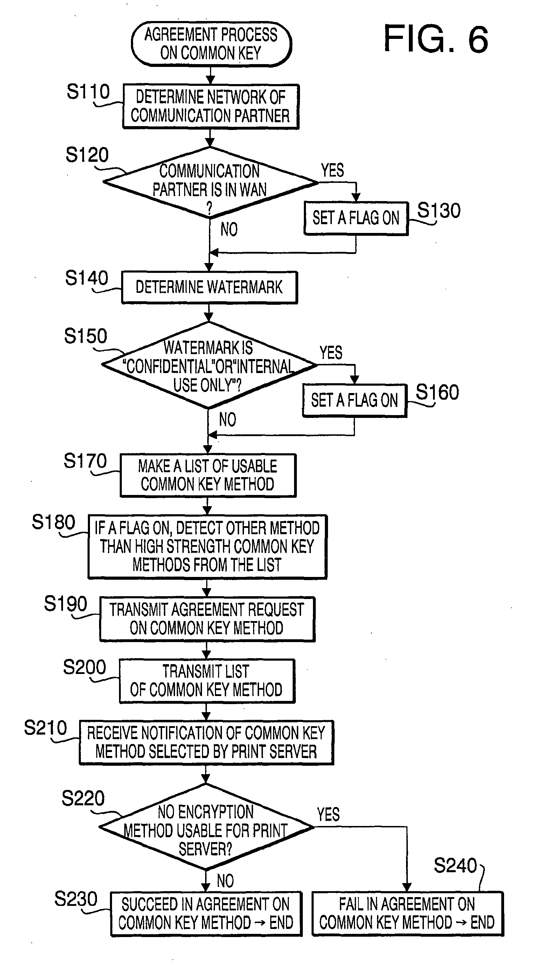

Fig. 6 is a flowchart which shows the agreement process on the common key method in the encryption and transmission process of the print data (see Fig. 5) executed by the client PC 10.

Firstly, a kind of a network to which a print server 20 of a communication partner belongs is determined (S110). Specifically, if IP addresses of the client PC 10 and the print server 20, the communication partner, are not private addresses, the kind of the network is determined to be WAN, and otherwise, it is determined to be LAN (that is, the print server 20 is belong to the same LAN which the client PC 10 belongs). Alternatively, the network may be determined to be WAN, if the IP addresses of the client PC 10 and the print server 20, the communication partner, have different network addresses. Otherwise, the network is determined to be LAN. If the communication partner is the print server 20a which is in the same LAN as the client PC 10, the kind of the network is determined to be LAN. On the other hand, if the communication partner is the print server 20b which is in other network (LAN 41), the kind of the network is determined to be WAN.

Next, it is determined whether the determined kind of the network is WAN (namely, whether the communication partner is in WAN) (S120). Here, if the communication partner is determined in WAN (Yes at S120), a flag which is used to extract high strength common key methods as encryption method candidates is set (S130), and the process goes to S 140. On the other hand, at S120, the kind of the network is determined to be LAN (namely, the communication partner is in the same LAN as the client PC 10) (No at S120), the process goes to directly S 140 without executing S130.

Next, the kind of the watermark which is setup on relevant print data is determined (S 140), and it is determined whether the setup watermark is "Confidential" or "Internal Use Only" (S 150). The watermark added to the print data is selected by a user beforehand in the section of setting of watermark of the security setup screen shown in Fig. 4. At S150, if the setup watermark is determined to be "Confidential" or "Internal Use Only" (Yes at S150), a flag which is used to extract high strength common key methods as encryption method candidates is set (S160), and the process goes to S 170. On the other hand, at S 150, if the setup watermark is not determined to be "Confidential" nor "Internal Use Only" (No at S150), the process goes directly to S 170 without executing S160.

Next, based on the indication in the section of "specification of usable common key methods" of the security setup screen shown in Fig. 4, a list of usable common key methods is made (S 170). The memory unit 12 stores key lengths corresponding to each common key method which are indications of encryption strength of each common key method usable for the client PC 10. These key lengths (encryption strength) are also listed up according to the name of the common key method when the list of usable common key methods is made.

Next, if a flag is set on at S 130 or S160, based on the indication in the section of "specification of high strength common key methods" of the security setup screen shown in Fig. 4, high strength common key methods are extracted from the generated list of common key methods, and other encryption methods are deleted from the list (S 180). If a flag is not set on, the process directly goes to S190.

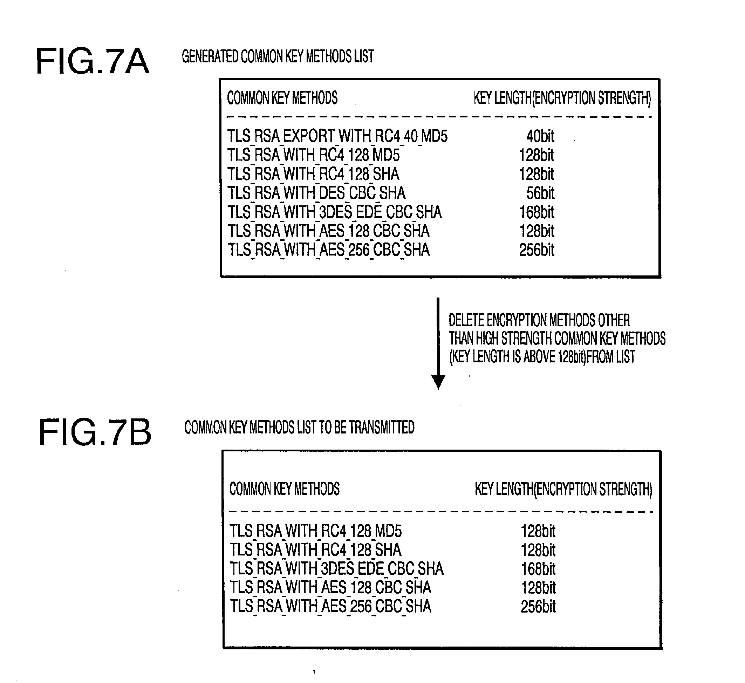

Fig. 7A is a figure which shows an example of a list of common key methods generated at S 170, and Fig. 7B is a figure which shows an example of a state where high strength common key methods are extracted from the generated list of common key methods, and other encryption methods are deleted from the list at S 180. Fig. 7B also shows an example where common key methods which have key lengths (encryption strength) of 128bit or higher are specified as high strength common key methods in the security setup screen shown in Fig. 4.

As described in Fig. 6, at S 190, a request for agreement on common key method is sent to the communication partner, the print server 20. Next, a list of common key methods generated at S 180 (see Fig. 7B) is sent to the communication partner, the print server 20 (S200).

Then, the notification of the common key method selected by the print server 20 based on the list which is sent at S200 is received (S210). Next, it is determined whether the received notification is an indication of "no common key method is usable for the print server 20" (S220). Here, if it is determined that the received notification is not an indication of "no common key method is usable for the print server 20" (that is, a notification of the selected common key encryption system) (No at S220), the agreement on the common key method with the print server 20 is successfully made, and the process is terminated (S230). On the other hand, if it is determined that the received notification is an indication of "no common key method is usable for the print server 20" (Yes at S220), the agreement on the common key method with the print server 20 is not successfully made, and the process is terminated (S240).

### Common Key Sharing Process

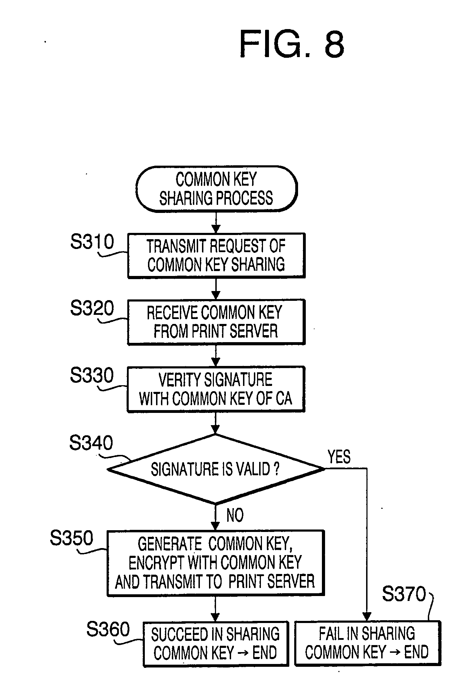

Fig. 8 is a flowchart which shows a common key sharing process at S60 in the print data encryption and transmission process (see Fig. 5). The common key sharing process is executed by the client PC 10.

First, a request for common key sharing is sent to the communication partner, the print server 20 (S310). Next, a public key (attached with an electronic signature of a certificate authority (CA)) which is transmitted from the print server 20 in response to the sent request for common key sharing is received (S320). Then, the electronic signature is verified with the common key (the public key of CA) issued by the certificate authority (CA) (S330) and it is determined whether the electronic signature is legitimate (S340).

Here, if the electronic signature attached to the public key is determined to be valid (Yes at S340), the common key is generated corresponding to the common key method agreed in the common key method agreement process at S30 (see Fig. 5), the generated common key is encrypted with the public key received form the print server 20, and the encrypted common key is sent to the print server 20 (S350). Then, as the common key is successfully shared with the print server 20, the process is terminated (S360).

On the other hand, if the electronic signature attached to the public key is determined to be not valid (Yes at S340), as the common key is failed in sharing with the print server 20, the process is terminated (S370).

### Communication Data Receiving Process and Print Data Decryption Process

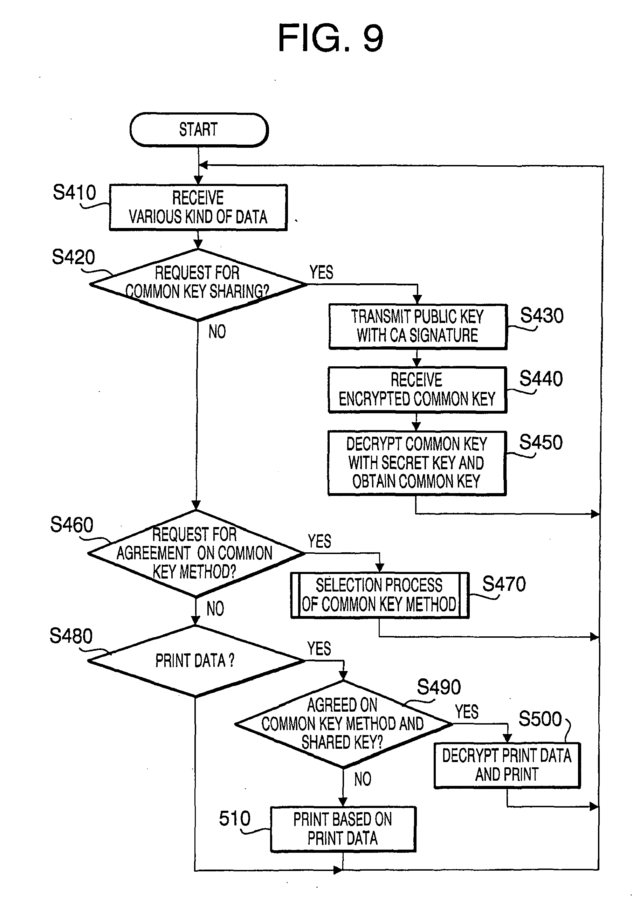

Fig. 9 is a flowchart which shows a communication data receiving process and a print data decryption process which are executed by CPU 21 of the print server 20

First, the print server waits for transmission of various data from the client PC 10, and receives the transmitted data (S410). Then, it is determined whether the received data is a request for common key sharing (S420). The request for common key sharing is sent in the common key sharing process (see Fig. 8) at S310.

If the received data is determined to be a request for common key sharing at S420 (Yes at S420), the public key (attached with a signature of the certificate authority (CA)) which is used in the public key method is sent to the client PC 10 (S430). Next, the common key encrypted with the sent public key is received from the client PC 10 (S440). Then, the common key is obtained by decrypting the encrypted common key (S450), the process goes back to S410. It is noted that the received common key is corresponding to the common key method which is selected beforehand in a common key selection process described later, and according to the common key method on which an agreement was made with the client PC 10.

On the other hand, if the received data is not determined to be the request for common key sharing at S420 (No at S420), it is determined whether the data is a request for agreement on common key method (S460). It is noted that the request for agreement on common key method is transmitted in the common key method agreement process (see Fig. 6) executed by the client PC 10 at S 190.

If the received data is determined to be a request for agreement on common key method at S460 (Yes at S460), a selection process of common key method is executed (S470) and then the process goes back to S410. Details of the selection process of common key method are described later.

On the other hand, if the received data is not determined to be a request for agreement on common key method at S460 (No at S460); it is determined whether the data is print data (S460). The print data is encrypted and transmitted at S80 in the encryption and transmitting process executed by the client PC 10 (see Fig. 5), or the print data is transmitted without being encrypted.

If the received data is determined to be print data at S480 (Yes at S480), it is determined whether an agreement on common key method is made with the client PC 10, and the common key according to the common key method is shared with the client PC 10 (S490). Specifically, the determination at S490 depends on whether the common key method to be used to encrypt the print data is selected at S470 which is described later, and whether the common key corresponding to the common key method is obtained at S430, S440 and S450.

Here, if it is determined that an agreement on common key method is done with the client PC 10, and the common key according to the common key method is shared with the client PC 10 (Yes at S490), the received print data is decrypted with the common key obtained at S430, S440 and S450, and the print unit 25 produces images on recording papers based on the decrypted print data (S500).

On the other hand, if it is determined that an agreement on common key method is not made with the client PC 10, or the common key according to the common key method is not shared with the client PC 10 (NO at S490), the print data is judged as non-encrypted print data, and the print unit 25 produces images on recording paper based on the print data (S510).

If it is determined that the received data is not print data (No at S480), the process goes back to S410.

### Selection Process of Common Key Method

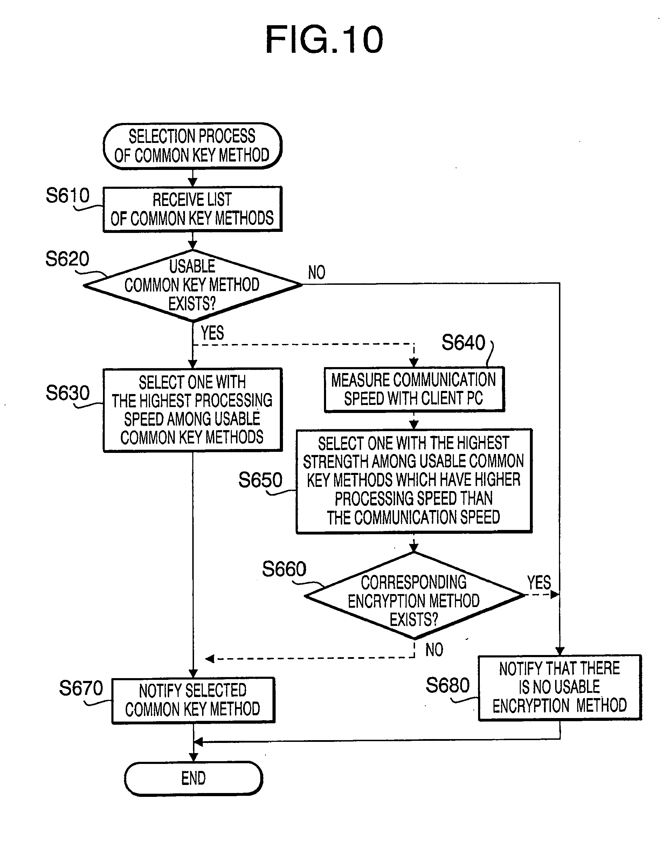

Fig. 10 is a flowchart which shows a selection process of a common key method which are executed by the print server 20 at S470 in the communication data receiving process and the print data decryption process (see Fig. 9).

First, a list of common key methods transmitted from the client PC 10 is received (S610). The list of common key methods is transmitted at S200 in the common key method agreement process (see Fig. 6).

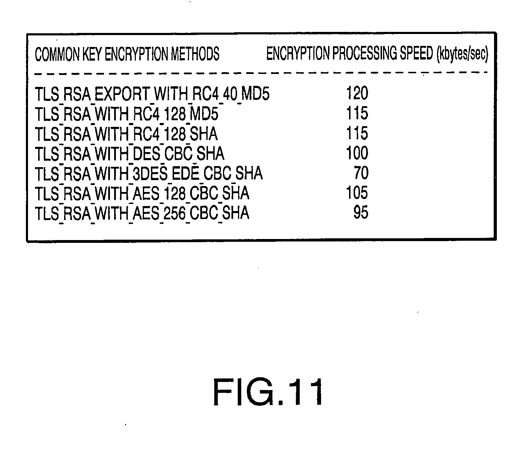

Next, it is determined whether there is a usable common key method for the print server 20 in the received list (S620). Here, it is determined that there is a usable common key method for the print server 20 in the received list (Yes at S620), the common key method which has the highest encryption processing speed in the print server 20 is selected from usable common key method for the print server 20 (S630) and the process goes to S670. It is noted that the memory unit 22 stores common key methods usable for the print server 20 and a table of encryption processing speeds as shown in Fig. 11 beforehand. Then, a common key method is selected based on encryption processing speeds which are stored in the memory unit 22 at S630.

On the other hand, if the determination at S620 is affirmative, then instead of executing S630, the process of S640, S650 and S660 may be executed in another embodiment. Namely, first, at S640, communication speed between the print server 20 and the client PC 10 is measured. Then, based on the measured communication speed, the common key method which has the highest encryption strength is selected among encryption methods which has higher encryption processing speed than the communication speed and usable for the print server 20. Even in the network which has very high communication speed, if encryption processing speed is lower than communication speed, the encryption processing speed becomes a bottleneck, and as a result, the same communication time is necessary as the network with lower communication speed. In addition, a print server may have CPU with less performance and dependent on an encryption method, decryption (or encryption) process may take a long time. Then, the network print system 1 can transmit/receive real data without lowering communication speed by selecting an encryption method which has higher encryption processing speed than the communication speed.

Next, it is determined whether there is a corresponding common key encryption method at the process of S650 (S660). Here, if it is determined that there is a corresponding common key encryption method (Yes at S660), the process goes to S670.

At S670, the common key encryption method selected at S630 or S660 is notified the client PC 10, and the process is terminated.
On the other hand, if it is determined that there is no common key method usable for the print server 20 in the received list at S620 (No at S620), or if it is determined that there is no corresponding common key method at S660 (No at S660), the print server 20 notifies the client PC 10 that there is no usable common key method, and the process is terminated.

The first embodiment of a network print system 1 is described above, and the configuration of the first embodiment of network print system 1 corresponds to the configuration of the invention of the claim is as follows. First, CPU 11 of the client PC 10 corresponds to the encryption unit, the network determination unit, the first extraction unit, the classification level determination unit, the second extraction unit, the extraction unit and the key generation unit of the claim. Next, CPU 11, the data transmission/receiving unit 13 and the network IF 14 correspond to the transmitting unit, the encryption method candidates notification unit, the extraction notification unit and the common key delivery unit respectively.

On the other hand, CPU 21 in the configuration of the print server 20 corresponds to the selection unit, the decryption unit, the measure unit and the determination unit. In addition, CPU 21, the data transmission/receiving unit 23 and the network IF 24 correspond to the encryption method notification unit, the receiving unit and the public key delivery unit, and the memory unit 22 corresponds to the memory unit.

### Second Embodiment

Hereinafter, various processes which are executed in a second embodiment of the network print system 1 will be described.

According to the second embodiment of the network print system 1, a configuration shown in Fig. 1 and Fig. 2 is similar to the configuration of the first embodiment. The common key method agreement process and the common key selection process are different from those of the first embodiment. Specifically, as different point, it may be indicated that the processes of S110, S120, S 130, S 170, S 180 (see Fig. 6) are executed by the print server 20 instead of the client PC 10 as in the first embodiment.

Since a print data encryption and transmission process and a common key sharing process executed by a client PC 10 of the second embodiment, and a communication data receiving process and a print data decryption process executed by a print server 20 are similar to the print data encryption and transmission process (see Fig. 5) and the common key sharing process (see Fig. 8), and the communication data receiving process and the print data decryption process refer to Fig. 9) respectively, description is omitted here.

### [Common Key Method Agreement Process (Second Embodiment)]

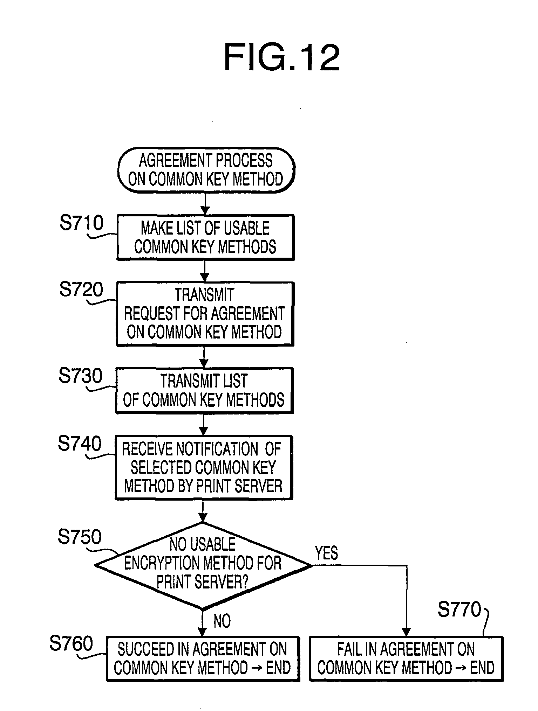

Fig. 12 is a flowchart which shows the common key method agreement process at S30 in the print data encryption and transmission process (see Fig. 5) executed by the client PC 10.

First, a list of usable common key methods for the client PC 10 is generated (S710). Then, a request for agreement on a common key method is sent to the communication partner, the print server 20 (S720). Next, the list of common key methods generated at S710 is sent to the communication partner, the print server 20 (S730).

Then, a notification of a selected common key method by the print server 20 based on the list sent at 5730 is received (S740). Next, it is determined whether the notification is an indication that "there is no usable common key method for the print server 20" (S750). Here, if it is determined that the notification is not an indication that "there is no usable common key method for the print server 20" (that is, the notification of the selected common key method) (No at S750), as the agreement on a common key method with the print server 20 is successfully made, the process is terminated (S760). On the other hand, if it is determined that the notification is an indication that "there is no usable common key method for the print server 20" (Yes at S750), as the agreement on a common key method with the print server 20 is failed, the process is terminated (S770).

### Common Key Encryption Method Selection Process (Second Embodiment)

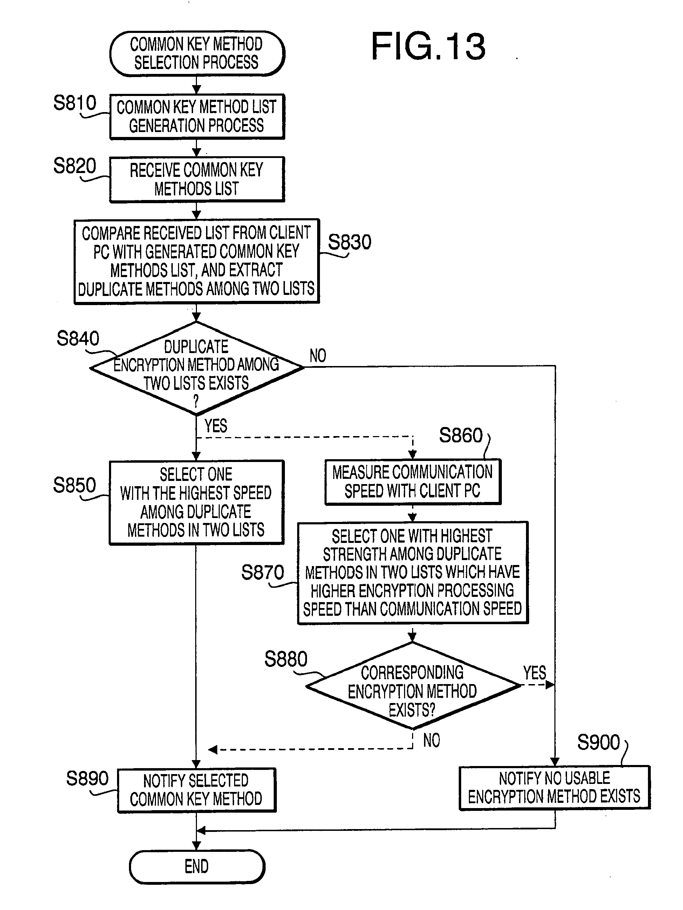

Fig. 13 is a flowchart which shows the communication data receiving process and the print data decryption process (see Fig. 9) which are executed by the print server 20.

First, a common key method list generation process executed, where common key methods which meet the given conditions are extracted among common key methods usable for the print server 20, and a list of common key encryption method candidates is generated (S810). Details of the common key method list generation process are described later.

Next, the list of common key method sent by the client PC 10 is received (S820). The list of common key methods is sent at S730 in the common key method agreement process executed by the client PC 10 (see Fig. 12).

Next, the list of common key methods generated at 5810 and the list of common key methods received from the client PC 10 at S820 are compared, and duplicated encryption methods in both lists are extracted (S830).

Then, it is determined whether there is an encryption method common to the both list (S840). Here, if it is determined that there is an encryption method common to the both list (Yes at S840), the common key method which has the highest encryption processing speed for the print server 20 among common key methods which are common to the both lists. It is noted that common key methods usable for the print server 20 and the table of encryption processing speeds are stored in the memory unit 22 as shown in Fig. 11 beforehand. Then, a common key method is selected based on the stored encryption processing speed at S850.

On the other hand, after the affirmative determination is done at S840, instead of S850 being executed, as another embodiment, processes of S860, S870 and S880 may be executed. That is, first, at S860, communication speed is measured between the print server 20 and the client PC 10. Based on the measured communication speed, among common key methods common to both of the lists, the encryption method which has the highest encryption strength and has higher encryption processing speed than the communication speed is selected (S870). Then, it is determined whether there is a corresponding common key method at S870 (S880). Here, if it is determined whether there is a corresponding common key method (Yes at S880), the process goes to S890.

At S890, the common key method which is selected at S850 or S880 is notified the client PC 10, and the process is terminated.
On the other hand, if it is determined that there is no common key method which is common to the both lists (No at S840), or if it is determined that there is no corresponding common key method (No at S880), it is notified that there is no usable common key method to the client PC 10 (S900), and the process is terminated.

### Common Key Methods List Generation Process

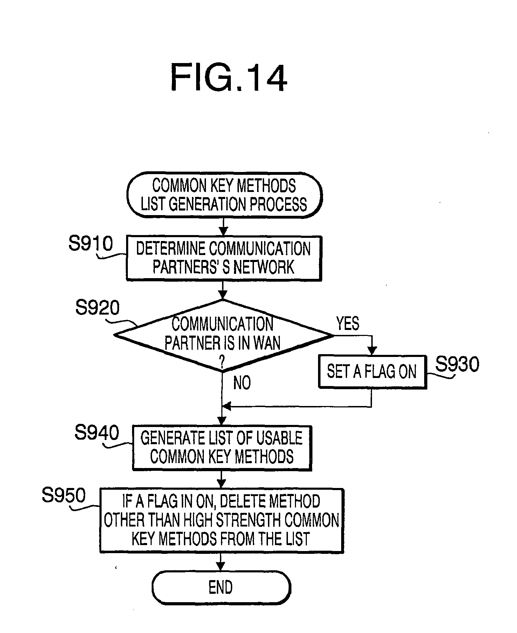

Fig. 14 is a flowchart which shows a common key methods list generation process at the common key method selection process (see Fig. 13) executed by the print server 20.

First, a kind of a network in which the communication partner, the client PC 10, is determined (S910). Next, it is determined whether the determined kind of the network is WAN (that is, the communication partner is in WAN) (S920). Here, if it is determined that the communication partner is in WAN (Yes at S920), a flag which is used to extract high strength common key methods as encryption method candidates is set (S930), and the process goes to S940. On the other hand, at S920, the kind of the network is determined to be LAN (namely, the communication partner is in the same LAN as the print server 20) (No at S920), the process goes to directly S940 without executing 5930.

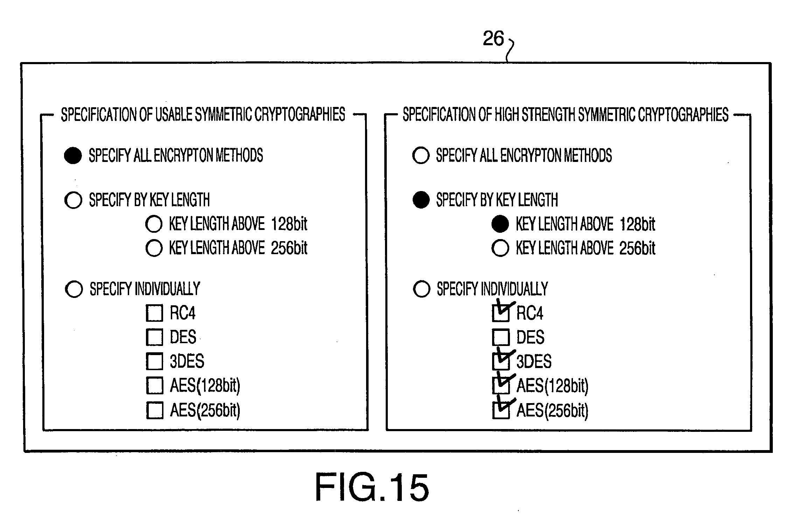

Next, a list of common key methods usable for the print server 20 based on the given conditions set up beforehand is generated (S940). Here, in the section of "specification of usable common key methods" of a security setup screen displayed on the display unit 26 as shown in Fig. 15, by a user's operation based on the given condition, common key methods which meets the condition among the common key methods usable for the print server 20 are extracted, and a list is made. It is noted that the key lengths which indicate encryption strength of each common key method usable for the print server 20 are stored in the memory unit 22 as corresponding to each common key method. The lengths (encryption strength) are listed up corresponding to the names of common key methods, when a list of usable common key methods is generated. Then, if a flag is set on at S930, based on the indication in the section of "specification of high strength common key methods" of the security setup screen shown in Fig. 15, high strength common key methods are extracted from the generated list of common key methods, and other encryption methods are deleted from the list (S950). If the flag is not set, the process is terminated.

Fig. 7A is a figure which shows an example of a list of common key methods generated at S940, and Fig. 7B is a figure which shows an example of a state where high strength common key methods are extracted from the generated list of common key methods, and other encryption methods are deleted from the list at S950. Fig. 7B also shows an example where common key methods which have key lengths (encryption strength) of 128bit or higher are specified as high strength common key methods in the security setup screen (see Fig. 15).

The second embodiment of a network print system 1 is described above, and the configuration of the second embodiment of the network print system 1 corresponds to the configuration of the invention of the claim is as follows. First, CPU 11 of the client PC 10 corresponds to the encryption unit and the key generation unit of the claim. Next, CPU 11, the data transmission/receiving unit 13 and the network IF 14 correspond to the transmission unit, the encryption method candidate notification unit and the common key transmission unit respectively.

On the other hand, CPU 21 in the configuration of the print server 20 corresponds to the selection unit, the decryption unit, the measure unit, the determination unit, the network determination unit and the extraction unit. In addition, CPU 21, the data transmission/receiving unit 23 and the network IF 24 correspond to the encryption method notification unit, the receiving unit, the extraction notification unit and the public key delivery unit, and the memory unit 22 corresponds to the memory unit.

### [Effect]

According to the embodiment of the network print system 1, the following effects are obtained. By selecting an encryption method which has higher encryption processing speed than the communication speed between the client PC 10 and the print server 20, and has higher encryption strength, a bottle neck of processing speed of encryption/decryption processes to lower the communication speed can be solved, and higher security is achieved. Accordingly, an effective network communication system can be achieved which has both fast processing time and high encryption strength.

Since an encryption method to be used in communication among encryption methods usable for both the client PC 10 and the print server 20 is selected, an error can be prevented where the print server cannot decrypt the print data encrypted by the client PC 10.

If the network used in communication is determined to be WAN, an encryption method is selected among encryption method candidates which have higher encryption strength than the given encryption strength based on the encryption processing speed. Therefore, a processing time can be shortened, while enough security strength is secured, because an encryption method which has higher encryption strength in the case communication is done via WAN which has high risk of leakage of secret information compared to the case of LAN.

In addition, an encryption method is selected from encryption method candidates which have higher encryption strength than the prescribed encryption strength based on encryption processing speeds, if the print data is added watermark which indicates high confidentiality such as "Confidential" or "Internal Use Only". Therefore, a processing time can be shortened, while enough security strength is secured even if print data which require high confidentiality is transmitted.

In the embodiment of the network print system 1, a common key method which has relatively low processing cost is used to encrypt print data. Then, the common key which is used in the common key method is encrypted with the public key of the public key method, and the common key is shared. Thus, the common key which is used in the common key method can be delivered safely, and the effective encryption process can be realized while enough security is secured. In addition, since the encryption process is performed after sharing the common key between the client PC 10 and the print server 20, an error can be prevented where the print server 20 cannot decrypt the print data encrypted by the client PC 10.

In the above, the embodiments of the present invention have been described. An embodiment of the invention is not limited to the above embodiments. According to the claims of the invention, various embodiments may be realized. For example, the invention can be applied to not only one way encrypted communication of print data from a client PC to a print server as in the embodiment of the network print system 1, but also mutual communication between communication devices which transmit/receive highly classified data. Namely, in the above described embodiments, a sever device selects an encryption method, and receives data encrypted with the encryption method from a client device. The client device may select an encryption method to transmit data, and may transmit the data encrypted with the encryption method.

In addition, data may be transmitted and received with an encryption method selected by one of the devices (for example, print data encrypted with an encryption method selected by a selection unit may be transmitted from a PC to a print server, and a notification that the print data is received to the PC may be encrypted with the same encryption method as in receiving the print data).

Further, other device in the network (for example, a management server) may select an encryption method, and it may be notified that data transmission/receiving should be performed with the encryption method to client devices and server devices.

In addition, in the above described embodiment, encryption methods which have higher encryption strength than prescribed threshold are extracted, the encryption method which has the highest processing speed among the extracted encryption methods. First, communication speed may be measured in data transmission and receiving, then encryption methods which have higher processing speed than the measured speed, and the method may be selected with high encryption strength.

## Claims

1. A network communication system provided with at least two communication devices which are communicatably connected with each other via a network, the at least two communication devices making an agreement on an encryption method employed therebetween, the at least two communication devices transmitting/receiving data using the agreed encryption method,
at least one of the at least two communication devices including:
a selection unit that selects an encryption method from among a plurality of encryption methods to be used in data transmission between the communication devices in accordance with an encryption processing speed representing a speed of encryption/decryption of communication data; and
an encryption method notification unit that notifies the communication devices of the encryption method selected by the selection unit,
one of the at least two the communication devices, which is to transmit the data, including:
an encryption unit that encrypts transmit data with the encryption method selected by the selection unit; and
a transmitting unit that transmits the data encrypted by the encryption unit to another one of the communication devices which is to receive the data,
other one of the two the communication devices, which is to receive the data, including:
a receiving unit that receives encrypted data transmitted from the one of the data communication devices; and
a decryption unit that decrypts the data received by the receiving unit in accordance with the encryption method selected by the selection unit.

2. The network communication system according to claim 1,
wherein the other one of the communication devices is provided with the selection unit and the encryption method notification unit, the encryption method notification unit notifying the one of the communication devices of the encryption method selected by the selection unit.

3. The network communication system according to claim 2,
wherein the other one of the communication devices is provided with a measure unit that measures a communication speed between the one of the communication devices and the other of the communication devices, the selection unit selecting an encryption method of which encryption processing speed has a higher speed than the communication speed measured by the measure unit among encryption method candidates.

4. The network communication system according to claim 3,
wherein the selection unit selects an encryption method that has the highest encryption strength from encryption methods of which encryption processing speed has a higher speed than the communication speed measured by the measure unit among the encryption method candidates.

5. The network communication system according to any one of claim 2 to 4,
wherein the one of the communication devices is provided with an encryption method candidates notification unit that notifies usable encryption methods for the one of the communication devices as encryption method candidates to the other one of the communication devices,
the other one of the communication devices is provided with a determination unit that determines whether there is a usable encryption method for the other one of the communication devices among encryption method candidates which are notified by the encryption method candidates notification unit,
and the selection unit of the other one of the communication devices selects an encryption method to be used in the communication between the one of the communication devices and the other one of the communication devices from encryption methods which are usable for both of the devices in the case that the determination unit of the other one of the communication devices determines that there is an encryption method that is usable for the other one of the communication devices.

6. The network communication system according to claim 5,
wherein the one of the communication devices is provided with
a network determination unit that determines whether the network is WAN or not,
and a first extraction unit that extracts encryption methods which have higher encryption strength than a given strength from usable encryption methods for the one of the communication devices in the case that the network is determined to be WAN by the network determination unit,
and the encryption method candidates notification unit notifies the other one of the communication devices of encryption methods extracted by the first extraction unit as encryption method candidates.

7. The network communication system according to claim 5 or claim 6,
wherein the one of the communication devices is provided with
a classification level determination unit that determines whether the given classification level is set to the transmit data,
and a second extraction unit that extracts encryption methods which have higher encryption strength than the given strength among usable encryption strength for the one of the communication devices in the case that the given classification level is determined to be set to the transmit data by the classification level determination unit,
and the encryption method candidates notification unit notifies the other one of the communication devices of encryption methods extracted by the second extraction unit as encryption method candidates.

8. The network communication system according to any one of claim 2 to 4,
wherein the network communication system includes a network determination unit that determines whether the network is WAN or not,
a extraction unit that extracts encryption methods which have higher encryption strength than a given strength from a plural of encryption methods in the case that the network is determined to be WAN by the network determination unit,
and an extraction notification unit that notifies the selection unit of encryption methods extracted by the extraction unit as encryption method candidates,
and the selection unit selects an encryption method to be used in the communication between the one of the communication devices and the other one of the communication devices from encryption method candidates which are extracted by the extraction unit.

9. The network communication system according to any one of claim 2 to 8,
wherein encryption method candidates from which the selection unit selects are common key methods in which the same key is used for encryption and decryption,
the other one of the communication devices is provided with
a memory unit that memorizes a public key and a private key of a public key method where different keys are used for encryption and decryption,
and a public key delivery unit that delivers a public key which the memory unit memorizes to the one of the communication devices,
the one of the communication devices is provided with
a key generation unit that generates a common key according to the encryption method which is notified by the encryption method notification unit,
and a common key delivery unit that encrypts the common key generated by the key generation unit with the public key received from the other one of the communication devices and delivers the common key to the other one of the communication devices,
the encryption unit encrypts the transmit data with the common key generated by the key generation unit,
the decryption unit decrypts an encrypted common key received from the one of the communication devices with a private key stored in the memory unit, and decrypts the encrypted transmit data using the decrypted common key.

10. A data receiving communication device for a network communication system provided with at least two communication devices which are communicatably connected with each other via a network, the at least two communication devices making an agreement on an encryption method employed therebetween, the at least two communication devices transmitting/receiving data using the agreed encryption method, comprising:
a selection unit that selects an encryption method from among a plurality of encryption methods to be used in data transmission between the communication devices in accordance with an encryption processing speed representing a speed of encryption/decryption of communication data;
a encryption method notification unit that notifies the data transmitting communication device of the encryption method selected by the selection unit;
a receiving unit that receives the encrypted transmit data from the data transmitting communication device; and
a decryption unit that decrypts the encrypted transmit data received by the receiving unit based on the encryption method which is selected by the selection unit.

11. A data transmitting communication device for a network communication system provided with at least two communication devices which are communicatably connected with each other via a network, the at least two communication devices making an agreement on an encryption method employed therebetween, the at least two communication devices transmitting/receiving data using the agreed encryption method, comprising:
an encryption unit that encrypts transmit data with an encryption method selected from among a plurality of encryption methods to be used in data transmission between the communication devices in accordance with an encryption processing speed representing a speed of encryption/decryption of communication data; and
a transmitting unit that transmits the data encrypted by the encryption unit to another one of the communication devices.

12. A computer-readable medium having a program stored thereon, the program product for making a computer function as a communication device of A network communication system provided with at least two communication devices which are communicatably connected with each other via a network, the at least two communication devices making an agreement on an encryption method employed therebetween, the at least two communication devices transmitting/receiving data using the agreed encryption method,
and the program makes a computer function as a selection unit that selects an encryption method from among a plurality of encryption methods to be used in data transmission between the communication devices in accordance with an encryption processing speed representing a speed of encryption/decryption of communication data.
